# EUROPÄISCHE PATENTSCHRIFT

(11) **EP 1 740 342 B1**
(45) Veröffentlichungstag und Bekanntmachung des Hinweises auf die Patenterteilung: **29.11.2017**
(21) Anmeldenummer: 05706204.4
(22) Anmeldetag: 25.02.2005
(51) Int. Cl.: B23K 35/28, B23K 35/02

(54) **SCHWEISSZUSATZMATERIALLEGIERUNG SOWIE VERFAHREN ZUR HERSTELLUNG EINES SCHWEISSDRAHTES**
ADDITIONAL WELDING MATERIAL ALLOY AND METHOD FOR THE PRODUCTION OF A WELDING ROD
ALLIAGE DE METAL D'APPORT DE SOUDAGE ET PROCEDE DE FABRICATION DE FIL D'APPORT

(30) Priorität: 24.03.2004 AT 5202004
(43) Veröffentlichungstag der Anmeldung: 10.01.2007
(73) Patentinhaber: Fronius International GmbH, 4643 Pettenbach (AT)
(72) Erfinder: BRUCKNER, Jürgen, A-8951 Trautenfels (AT)
(74) Vertreter: Sonn & Partner Patentanwälte
(86) Internationale Anmeldenummer: PCT/AT2005/000065
(87) Internationale Veröffentlichungsnummer: WO 2005/089037

(56) Entgegenhaltungen:
- US-A1- 2002 197 506
- US-A1- 2004 028 940
- "CLAD PRODUCTS" Februar 1999 (1999-02), RESEARCH DISCLOSURE, MASON PUBLICATIONS, HAMPSHIRE, GB, PAGE(S) 192 , XP000893222 ISSN: 0374-4353 das ganze Dokument
- PATENT ABSTRACTS OF JAPAN Bd. 1995, Nr. 06, 31. Juli 1995 (1995-07-31) & JP 07 068374 A (SHOWA ALUM CORP), 14. März 1995 (1995-03-14)
- PATENT ABSTRACTS OF JAPAN Bd. 1998, Nr. 05, 30. April 1998 (1998-04-30) & JP 10 005992 A (NGK SPARK PLUG CO LTD), 13. Januar 1998 (1998-01-13)

## Beschreibung

Die Erfindung betrifft die Verwendung einer Legierung als Schweißzusatzmaterial, vorzugsweise in Form eines Schweißdrahtes, basierend auf Aluminium sowie ein Verfahren zur Herstellung eines Schweißdrahtes aus einer erfindungsgemäßen Schweißzusatzmateriallegierung. Ebenso betrifft die Erfindung ein Verfahren zur Herstellung einer schweißgelöteten Konstruktion, bei dem zwei Komponententeile vorgesehen sind, wobei ein erster Komponententeil aus Aluminium besteht und ein zweiter Komponententeil aus Stahl besteht und eine Schweißlötkonstruktion mit zwei Komponententeilen, wobei ein Komponententeil aus Aluminium besteht und ein zweiter Komponententeil aus Stahl besteht.

Beim Schweißen werden metallische Werkstoffe durch Erwärmen der Stoßstellen bis in den Schmelzbereich unter Zusetzen von artgleichem Schweißzusatzmaterial mit gleichem oder in der Regel nahezu gleichem Schmelzbereich wie die zu verbindenden Werkstoffe verbunden. Problematisch ist jedoch die Herstellung einer Schweißverbindung von zwei metallischen Werkstoffen, die unterschiedliche chemische und physikalische Eigenschaften aufweisen. Beispielsweise treten derartig große Unterschiede hinsichtlich der chemischen und physikalischen Eigenschaften bei Aluminium und Stahl auf, da Stahl einen Schmelzpunkt von 1535°C, Aluminium hingegen einen Schmelzpunkt von 660°C aufweist. Darüber hinaus ist Eisen in Aluminium nicht löslich, so dass bei der Schweißverbindung zwischen Aluminium und Stahl eine intermetallische Phase (IMP) auftritt. Diese intermetallische Phase ist äußerst spröde, so dass mit Hilfe von bekannten Schweißzusatzmaterialien lediglich Schweißverbindungen zwischen Aluminium und Stahl mit unzureichenden Festigkeitswerten verbunden werden können. Auch die Korrosionsfestigkeit von Aluminium/Stahl-Schweißverbindungen ist mit bekannten Schweißzusatzmaterialien äußerst gering.

Bekannte auf Aluminium basierende Schweißzusatzmateriallegierungen sind beispielsweise AlSi 5 bzw. Al 99,8 (hochreiner Aluminiumdraht). AlSi 5 Legierungen weisen neben Aluminium folgende Zusammensetzung in Gewichtsprozent auf:

| | |
|---|---|
| Fe | 0,6 |
| Cu | 0,3 |
| Mg | 0,2 |

| | |
|---|---|
| Ti | 0,15 |
| Si | 4,5 - 6 |

Hochreiner Aluminiumdraht, wie Al 99,8, weist hingegen neben Aluminium folgende Zusammensetzung in Gewichtsprozent auf:

| | |
|---|---|
| Fe | 0,15 |
| Cu | 0,03 |
| Mg | 0,02 |
| Ti | 0,02 |

Mit diesen Standard-Drähten ergibt sich jedoch - wie bereits vorstehend erwähnt - eine ausgeprägte Ausbildung der intermetallischen Phase (IMP) beim Schweißlöten von Aluminium und Stahl, so dass mit diesen Drähten nur Schweißlötverbindungen zwischen Stahl und Aluminium mit unzureichenden (Korrosions-)Festigkeitswerten hergestellt werden können.

"Clad Products" vom Februar 1999, Research Disclosure, Manson Publication, Hampshire, GB, Seite 192, XP000893222 beschreibt eine Aluminiumlegierung mit folgende Zusammensetzung in Gewichtsprozent:

| | |
|---|---|
| Si | 2 - 14 |
| Mg | < 2,0, vorzugsweise 0,4 - 1,3 |
| Cr | < 1,0 |
| Fe | < 0,8 vorzugsweise < 0,5 |
| Mn | < 1,0 |
| Cr | < 0,5 |

Ti und/oder Sr und/oder Zr und/oder Sb jeweils <0,2 Gesamtverunreinigungen bis zu 0,3 und der Rest Al,
für die Umhüllung von Hartlotblechen bzw. für die Umhüllung von Blechen und Platten zur Verwendung im Schiffs- und Flugzeugbau. Eine Verwendung dieser Legierung als Schweißdraht ist dem genannten Dokument jedoch nicht zu entnehmen.

Patent Abstracts of Japan, Bd. 1995, Nr. 6 vom 31.07.1995 & JP 07 068374 A (Showa Alum Corp.) offenbart die Verwendung eines Hartlot-Füllmaterials auf Basis von Al-Si zum Hartverlöten eines Rohres aus rostfreiem Stahl mit einem Aluminiumrohr. Die genaue Zusammensetzung des Hartlot-Füllmaterial wird nicht erwähnt.

Ziel der vorliegenden Erfindung ist nun eine Schweißzusatzmateriallegierung der eingangs angeführten Art zu schaffen, mit deren Hilfe zwei metallische Werkstoffe mit unterschiedlichen chemischen und physikalischen Eigenschaften, insbesondere Aluminium und Stahl, mittels eines Schweißlötverfahrens verbunden werden können, wobei die Schweißlötverbindung eine gegenüber Schweißverbindungen mit bekannten Schweißzusatzmateriallegierungen erhöhte Festigkeit aufweist. Zudem sollen die mit der erfindungsgemäßen Schweißzusatzmateriallegierung hergestellten Schweißlötverbindungen auch eine verbesserte Korrosionsfestigkeit aufweisen. Ebenso soll ein Verfahren der eingangs angeführten Art zur Herstellung eines Schweißdrahtes, bestehend aus einer erfindungsgemäßen Schweißzusatzmateriallegierung, sowie ein Verfahren zur Herstellung einer schweißgelöteten Konstruktion und eine Schweißkonstruktion der eingangs angeführten Art, welche eine derartige Schweißzusatzmateriallegierung umfassen, geschaffen werden.

Dieses Ziel wird erfindungsgemäß dadurch erreicht, dass eine Legierung basierend auf Aluminium gekennzeichnet durch folgende Zusammensetzung in Gewichtsprozent:

| | |
|---|---|
| Si | 1 - 5 |
| Fe | < 0,1 |
| Mn | 0,5 - 1,5 |
| Zr | ≤ 0,01 |
| Cr | ≤ 0,01 |
| Cu | < 0,03 |
| Mg | < 0,01 |
| Ti | < 0,005 |
| Na,P, B in Summe | < 0,005 |

und unvermeidbaren Unreinheiten mit einem Anteil in Gewichtsprozent jeweils ≤ 0,001 und einem Rest bestehend aus Al als Schweißzusatzmateriallegierung, vorzugsweise in Form eines Schweißdrahtes, zum Verschweißen von Aluminium und Stahl verwendet wird.

Die Zusammensetzung der vorstehend genannten Schweißzusatzmateriallegierung zeichnet sich insbesondere durch das Vorliegen der genannten Mindestanteile an Silizium und Mangan aus. Ferner sind gegenüber bekannten Schweißzusatzmateriallegierungen vergleichsweise geringe Anteile der übrigen Bestandteile (insbesondere von Fe, Mg) vorgesehen, so dass - abgesehen von den Silizium- und Mangan-Anteilen - eine äußerst reine Aluminiumlegierung vorliegt. Tests haben gezeigt, dass hierdurch eine sehr gute Verbindung von zwei unterschiedlichen metallischen Werkstoffen, insbesondere Aluminium und Stahl, erzielt wird. Insbesondere ist die Ausbildung der intermetallischen Phase (IMP), wie sich diese auf Grund der Unlöslichkeit von Eisen in Aluminium bildet, im Vergleich zu Schweißlötverbindungen mit bekannten Schweißzusatzmaterialien vergleichsweise gering. Zudem wurde bei Tests mit der erfindungsgemäß verwendeten Schweißzusatzmateriallegierung auch eine sehr gute Korrosionsfestigkeit erzielt.

Sofern die Grenzwerte des Silizium-Anteils der erfindungsgemäßen Schweißzusatzmateriallegierung unter- bzw. überschritten werden, ergibt sich ein zungenförmiges Wachstum der intermetallischen Phase (IMP), welches zu einer deutlichen Verschlechterung der mechanischen Eigenschaften der Schweißverbindung führt.

Auch der Mangan-Anteil der erfindungsgemäß verwendeten Schweißzusatzmateriallegierung dient dazu, die Ausbildung der intermetallischen Phase (IMP) zwischen den beiden zu bindenden Werkstoffen relativ gering zu halten. Zusätzlich dient der Mangan-Anteil auch dazu, die Neigung zur interkristallinen Korrosion des Schweißzusatzmaterials zu verringern.

Tests haben gezeigt, dass die Ausbildung der intermetallischen Phase zwischen zwei metallischen Werkstoffen, insbesondere im Fall von Aluminium und Stahl, besonders gering bleibt, wenn der Si-Gehalt der erfindungsgemäß verwendeten Schweißzusatzmateriallegierung zwischen 2 - 3,5, vorzugsweise im Wesentlichen 3, beträgt.

Ebenso konnten bei Tests die besten Festigkeitswerte, insbesondere hinsichtlich der Korrosionsfestigkeit einer Schweißlötverbindung, erzielt werden, wenn der Mn-Gehalt der erfindungsgemäß verwendeten Schweißzusatzmateriallegierung zwischen 0,9 - 1,1, vorzugsweise im Wesentlichen 1, beträgt.

Es ist auch möglich, dass noch zusätzliche Mikroelemente zur Verbesserung der Kornfeinheit und/oder der Duktilität des Gefüges der Schweißdrahtzusammensetzung beigefügt werden. Hierzu könnten beispielsweise die Elemente Zr, Na, Li, Be, P, Ka, Ca, Sr und/oder Sb beigemischt werden, d.h., dass die Elemente alleinstehend oder in Kombination zueinander zu der erfindungsgemäß verwendeten Schweißzusatzmateriallegierung beigemischt werden.

Das Verfahren zur Herstellung eines Schweißdrahtes der eingangs angeführten Art ist dadurch gekennzeichnet, dass ein Körper mit folgender Zusammensetzung in Gewichtsprozent bereitgestellt wird:

| | |
|---|---|
| Si | 1 - 5 |
| Fe | < 0, 1 |
| Mn | 0,5 - 1,5 |
| Zr | ≤ 0,01 |
| Cr | ≤ 0,01 |
| Cu | < 0,03 |
| Mg | < 0.01 |
| Ti | < 0,005 |
| Na, P, B in Summe | < 0,005 |

und unvermeidbaren Unreinheiten mit einem Anteil in Gewichtsprozent jeweils ≤ 0,001 und einem Rest bestehend aus Al, und dass ein aus dieser Legierung bestehender Körper zur Herstellung eines Schweißdrahtes gezogen wird.

Grundsätzlich ergeben sich die Vorteile für einen nach dem erfindungsgemäßen Verfahren hergestellten Schweißdraht bereits aus den vorstehend im Zusammenhang mit der erfindungsgemäß verwendeten Schweißzusatzmateriallegierung genannten Vorteilen, so dass zwecks Vermeidung von Wiederholungen auf vorstehende Ausführungen verwiesen wird.

Das erfindungsgemäße Verfahren zur Herstellung einer schweißgelöteten Konstruktion der eingangs angeführten Art ist dadurch gekennzeichnet, dass die beiden Komponententeile mit Hilfe eines Schweißzusatzmaterials, das eine Schweißzusatzmateriallegierung gemäß einem der Ansprüche 1 bis 3 aufweist, schweißgelötet werden. Durch das Verschweißen des Aluminium-Komponententeils mit einem Stahl-Komponententeil mit Hilfe eines Schweißzusatzmaterials, das die erfindungsgemäß verwendete Legierung aufweist, können im Vergleich zu bekannten Schweißzusatzmaterialien verbesserte Festigkeitswerte, insbesondere auch verbesserte Korrosionsfestigkeitswerte, erzielt werden, wie bereits vorstehend erläutert.

Die Schweißlötkonstruktion der eingangs angeführten Art ist dadurch gekennzeichnet, dass die beiden Komponententeile mit Hilfe eines Schweißzusatzmaterials, das eine Schweißzusatzmateriallegierung gemäß einem der Ansprüche 1 bis 3 aufweist, schweißgelötet sind. Hierdurch wird erstmals eine Schweißlötkonstruktion aus einem Aluminium- und einem Stahlkomponententeil geschaffen, deren Schweißlötverbindung eine hohe Festigkeit und auch Korrosionsfestigkeit aufweist. Auch hierzu ergeben sich weitere Vorteile bereits aus vorstehenden Ausführungen.

Die Erfindung wird nachstehend noch anhand von einem in der Zeichnung dargestellten bevorzugten Ausführungsbeispiel, auf das sie jedoch nicht beschränkt sein soll, noch weiter erläutert. Im Einzelnen zeigen in der Zeichnung:
Fig. 1 eine photographische Abbildung eines Schnitts einer Schweißverbindung zwischen einem Stahl- und einem Aluminiumwerkstoff gemäß Stand der Technik, wobei ein Al 99,5 Standard-Schweißdraht als Schweißzusatzmaterial herangezogen wurde; und
Fig. 2 eine photographische Abbildung eines Schnitts einer Schweißlötverbindung zwischen einem Stahl- und einem Aluminiumwerkstoff, wobei ein Schweißdraht mit der erfindungsgemäß verwendeten Schweißzusatzmateriallegierung bei Herstellung der Schweißlötverbindung verwendet wurde.

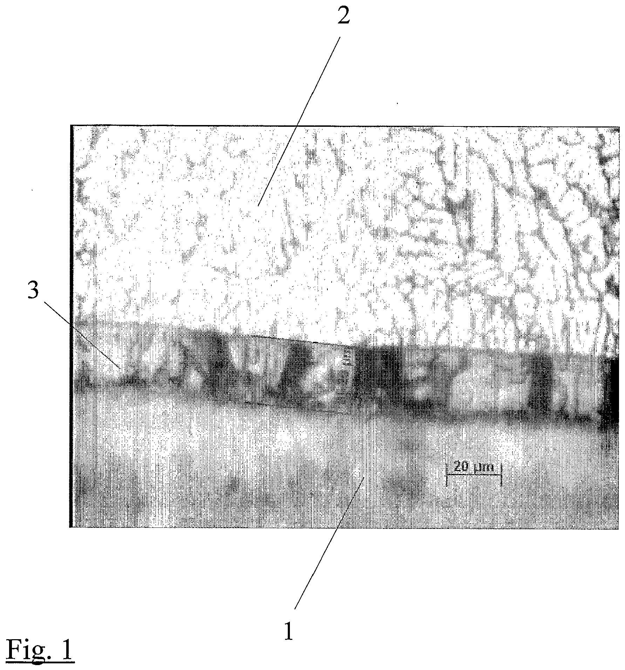

In Fig. 1 ist eine Schweißverbindung zwischen einem Stahlblech (DC 04 AZE) 1 mit einer Blechstärke von 1mm und einem Aluminiumblech (AW 6016) 2 ebenfalls mit einer Blechstärke von 1mm gezeigt. Bei der Herstellung der Schweißlötverbindung wurde ein hochreiner Aluminium-Standard-Schweißdraht (Al 99,5) verwendet. Hierbei ist ersichtlich, dass sich beim Schweißen eine deutliche Ausprägung der intermetallischen Phase 3 mit einer Stärke von 10µm ergibt. Da eine derartig ausgeprägte intermetallische Phase 3 eine spröde Verbindung zwischen dem Stahlwerkstoff 1 und dem Aluminiumwerkstoff 2 darstellt, weisen derartige Schweißlötverbindungen unzureichende Festigkeitswerte auf.

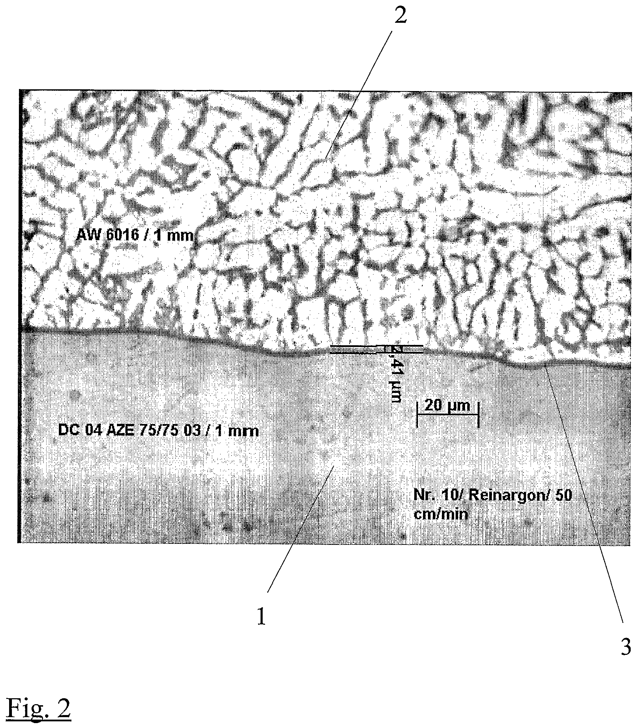

In Fig. 2 ist ebenfalls eine Schweißlötverbindung zwischen einem Stahlblech (DC 04 AZE) 1 mit einer Wanddicke von 1mm und einem Aluminiumblech (AW 6016) 2 ebenfalls mit einer Wanddicke von 1mm gezeigt, wobei anstelle des Standard-Schweißdrahtes Al 99,5 (vgl. Fig. 1) ein Schweißdraht mit der erfindungsgemäß verwendeten Legierung verwendet wurde.

Wie aus Fig. 2 ersichtlich, ist hierbei die Ausbildung der intermetallischen Phase 3 wesentlich geringer und weist in dem gezeigten Schnitt lediglich eine Dicke von 2,41µm auf. Durch die Reduktion der intermetallischen Phase 3 zwischen den beiden metallischen Werkstoffen 1, 2 konnte somit eine Schweißlötverbindung zwischen einem Aluminium- und einem Stahlwerkstoff mit wesentlich höheren Festigkeitswerten, insbesondere auch Korrosionsfestigkeitswerten, im Vergleich zu bekannten Schweißdrähten erzielt werden.

Um die Korrosionsfestigkeit der Schweißlötverbindung zwischen dem Stahlblech 1 und dem Aluminiumblech 2 zu überprüfen, wurde ein so genannter Salzsprühnebeltest nach DIN 50021/SS durchgeführt, bei dem für 120 Stunden die Proben mit Natriumchloridhaltigen Nebel besprüht werden. Hierdurch wird eine Befeuchtung der Proben, wie diese z.B. im Winter nach Ausbringung von Streusalzen auf stark befahrenen Straßen oder an Meeresküsten auftreten kann, simuliert.

Wie nachstehender Tabelle 1 entnommen werden kann, konnten bei Tests mit einem AlSi 5 (AW 4043) Standard-Schweißdraht zwar zufriedenstellende statische Festigkeitswerte erzielt werden, jedoch weist dieser Standard-Schweißdraht im Vergleich zu einem Schweißdraht gemäß der Erfindung einen geringeren Mangan-Anteil auf, so dass eine derartige Schweißlötverbindung eine unzureichende Korrosionsfestigkeit aufweist.

**Tabelle 1**

| Schweißdraht | Rₘ [N/mm²] | Rₘ [N/mm²] |
|---|---|---|
| | ohne Korrosion | mit Korrosion |
| AW 4043 | 148 | 83 |
| Erfindungsgemäß verwendete Legierung | 165 | 161 |

Zusammenfassend ergibt sich somit, dass durch die erfindungsgemäß verwendete Schweißzusatzmateriallegierung erstmals eine Schweißlötverbindung von unterschiedlichen metallischen Werkstoffen, wie Aluminium und Stahl, hergestellt werden kann, welche sowohl zufriedenstellende Festigkeits- als auch Korrosionsfestigkeitswerte aufweist.

## Patentansprüche

1. Verwendung einer Legierung basierend auf Aluminium **gekennzeichnet durch** folgende Zusammensetzung in Gewichtsprozent:
| | |
|---|---|
| Si | 2 - 3,5 |
| Fe | < 0,1 |
| Mn | 0,5 - 1,5 |
| Zr | ≤ 0,01 |
| Cr | ≤ 0,01 |
| Cu | < 0,03 |
| Mg | < 0,01 |
| Ti | < 0,005 |
| Na, P, B in Summe | < 0,005 |
und unvermeidbaren Unreinheiten mit einem Anteil in Gewichtsprozent jeweils ≤ 0,001 und einem Rest bestehend aus Al als Schweißzusatzmateriallegierung in Form eines Schweißdrahtes zum Verschweißen von Aluminium und Stahl, wobei der Schweißzusatzmateriallegierung Beryllium Be beigemischt wird.

2. Verwendung nach Anspruch 1, **dadurch gekennzeichnet, dass** der Mn-Gehalt der Legierung zwischen 0,9 - 1,1, vorzugsweise im Wesentlichen 1, beträgt.

3. Verfahren zur Herstellung eines Schweißdrahtes aus einer Schweißzusatzmateriallegierung basierend auf Aluminium zum Verschweißen von Aluminium und Stahl, **dadurch gekennzeichnet, dass** ein Körper mit folgender Zusammensetzung in Gewichtsprozent bereitgestellt wird:
| | |
|---|---|
| Si | 2 - 3,5 |
| Fe | < 0, 1 |
| Mn | 0,5 - 1,5 |
| Zr | ≤ 0,01 |
| Cr | ≤ 0,01 |
| Cu | < 0,03 |
| Mg | < 0,01 |
| Ti | < 0,005 |
| Na, P, B in Summe | < 0,005 |
und unvermeidbaren Unreinheiten mit einem Anteil in Gewichtsprozent jeweils ≤ 0,001 und einem Rest bestehend aus Al, wobei der Schweißzusatzmateriallegierung Beryllium Be beigemischt wird, und ein aus dieser Legierung bestehender Körper zur Herstellung eines Schweißdrahtes gezogen wird.

4. Verfahren zur Herstellung einer schweißgelöteten Konstruktion, bei dem zwei Komponententeile (1, 2) vorgesehen sind, wobei ein erster Komponententeil (2) aus Aluminium besteht und ein zweiter Komponententeil (1) aus Stahl besteht, **dadurch gekennzeichnet, dass** die beiden Komponententeile (1, 2) mit Hilfe eines Schweißzusatzmaterials, das eine Metalllegierung gemäß einem der Ansprüche 1 oder 2 aufweist, schweißgelötet werden.

5. Schweißlötkonstruktion mit zwei Komponententeilen (1, 2), wobei ein Komponententeil (2) aus Aluminium besteht und ein zweiter Komponententeil (1) aus Stahl besteht, **dadurch gekennzeichnet, dass** die beiden Komponententeile (1, 2) mit Hilfe eines Schweißzusatzmaterials, das eine Metalllegierung gemäß einem der Ansprüche 1 oder 2 aufweist, schweißgelötet sind.

## Claims

1. Use of an aluminium-based alloy **characterised by** the following composition in wt.%:
| | |
|---|---|
| Si | 2 - 3.5 |
| Fe | < 0.1 |
| Mn | 0.5 - 1.5 |
| Zr | ≤ 0.01 |
| Cr | ≤ 0.01 |
| Cu | < 0.03 |
| Mg | < 0.01 |
| Ti | < 0.005 |
| Na, | P, B in total < 0.005 |
and unavoidable impurities in a proportion in wt.% ≤0.001 in each case and a remainder consisting of Al as an additional welding material alloy in the form of a welding wire for welding aluminium and steel, beryllium (Be) being admixed with the additional welding material alloy.

2. Use according to claim 1, **characterised in that** the Mn content of the alloy is between 0.9 and 1.1, preferably substantially 1.

3. Method for producing a welding wire from an aluminium-based additional welding material alloy for welding aluminium and steel, **characterised in that** a body having the following composition in wt. % is prepared:
| | |
|---|---|
| Si | 2 - 3.5 |
| Fe | < 0.1 |
| Mn | 0.5 - 1.5 |
| Zr | ≤ 0.01 |
| Cr | ≤ 0.01 |
| Cu | < 0.03 |
| Mg | < 0.01 |
| Ti | < 0.005 |
| Na, P, B in total | < 0.005 |
and unavoidable impurities in a proportion in wt.% ≤ 0.001 in each case and a remainder consisting of Al, beryllium (Be) being admixed with the additional welding material alloy, and a body consisting of said alloy being drawn in order to produce a welding wire.

4. Method for producing a braze-welded construction, in which method two component parts (1, 2) are provided, a first component part (2) consisting of aluminium, and a second component part (1) consisting of steel, **characterised in that** the two component parts (1, 2) are braze-welded with the aid of an additional welding material that comprises a metal alloy according to either claim 1 or claim 2.

5. Braze-welded construction comprising two component parts (1, 2), one component part (2) consisting of aluminium, and a second component (1) part consisting of steel, **characterised in that** the two component parts (1, 2) are braze-welded with the aid of an additional welding material that comprises a metal alloy according to either claim 1 or claim 2.

## Revendications

1. Utilisation d'un alliage à base d'aluminium, **caractérisé par** la composition suivante, en pourcentage en poids :
| | |
|---|---|
| Si | 2 - 3,5 |
| Fe | < 0,1 |
| Mn | 0,5 - 1,5 |
| Zr | ≤ 0,01 |
| Cr | ≤ 0,01 |
| Cu | < 0,03 |
| Mg | < 0,01 |
| Ti | < 0,005 |
| somme de Na, P, B | < 0,005 |
chacune des impuretés inévitables étant présente selon un pourcentage en poids ≤ 0,001, et un résidu constitué d'Al, en tant qu'alliage pour métal d'apport sous forme d'un fil d'apport pour souder l'aluminium et l'acier, du béryllium Be étant ajouté à l'alliage pour métal d'apport.

2. Utilisation selon la revendication 1, **caractérisée en ce que** la teneur de l'alliage en Mn est comprise entre 0,9 et 1,1, et est de préférence pour l'essentiel de 1.

3. Procédé de fabrication d'un fil d'apport en un alliage pour métal d'apport à base d'aluminium pour souder l'aluminium et l'acier, **caractérisé en ce qu'**on prépare un corps ayant la composition suivante :
| | |
|---|---|
| Si | 2 - 3,5 |
| Fe | < 0,1 |
| Mn | 0,5 - 1,5 |
| Zr | ≤ 0,01 |
| Cr | ≤ 0,01 |
| Cu | < 0,03 |
| Mg | < 0,01 |
| Ti | < 0,005 |
| somme de Na, P, B | < 0,005 |
et chacune des impuretés inévitables étant présente selon une proportion en pourcentage en poids ≤ 0,001, et un résidu constitué d'Al, du béryllium Be étant ajouté à l'alliage pour métal d'apport, et, pour fabriquer un fil d'apport, on étire un corps constitué de cet alliage.

4. Procédé de fabrication d'une construction soudobrasée, dans lequel deux pièces (1, 2) sont prévues, une première pièce (2) étant constituée d'aluminium et une deuxième pièce (1) étant constituée d'acier, **caractérisé en ce que** les deux pièces (1, 2) sont soudobrasées à l'aide d'un matériau d'apport qui comprend un alliage métallique selon l'une des revendications 1 ou 2.

5. Construction soudobrasée comprenant deux pièces (1, 2), une première pièce (2) étant constituée d'aluminium et une deuxième pièce (1) étant constituée d'acier, **caractérisée en ce que** les deux pièces (1, 2) sont soudobrasées à l'aide d'un matériau d'apport qui comprend un alliage métallique selon l'une des revendications 1 ou 2.
